(19) **Europäisches Patentamt**
**European Patent Office**
**Office européen des brevets**

(11) **EP 4 467 929 B1**

(12) **EUROPEAN PATENT SPECIFICATION**

(45) Date of publication and mention
of the grant of the patent:
**10.12.2025 Bulletin 2025/50**

(51) International Patent Classification (IPC):
**G01D 3/02** $^{(2006.01)}$

(52) Cooperative Patent Classification (CPC):
**G01D 3/08; G01D 3/022**

(21) Application number: **23175438.3**

(22) Date of filing: **25.05.2023**

(54) **CALCULATION UNIT FOR A SENSOR DEVICE, SENSOR DEVICE AND METHOD RELATED TO UPDATING A SENSOR MODEL**

RECHENEINHEIT FÜR EINE SENSOREINRICHTUNG, SENSOREINRICHTUNG UND VERFAHREN ZUM AKTUALISIEREN EINES SENSORMODELLS

UNITÉ DE CALCUL POUR UN DISPOSITIF CAPTEUR, DISPOSITIF CAPTEUR ET PROCÉDÉ ASSOCIÉ À LA MISE À JOUR D'UN MODÈLE DE CAPTEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**27.11.2024 Bulletin 2024/48**

(73) Proprietor: **Infineon Technologies AG**
**85579 Neubiberg (DE)**

(72) Inventors:
• **CARBONELLI, Cecilia**
**81477 München (DE)**
• **SUKIANTO, Tobias**
**80636 München (DE)**
• **SCHOBER, Sebastian**
**89073 Ulm (DE)**
• **MITTERMAIER, Simon**
**85659 Forstern (DE)**

(74) Representative: **König, Andreas Rudolf et al**
**Schoppe, Zimmermann, Stöckeler**
**Zinkler, Schenk & Partner mbB**
**Patentanwälte**
**Radlkoferstraße 2**
**81373 München (DE)**

(56) References cited:
**WO-A2-2019/028269     AU-A4- 2020 102 819**
**US-A- 4 831 380      US-A1- 2022 236 244**

• **ANDREA POLLASTRO ET AL: "Semi-supervised detection of structural damage using Variational Autoencoder and a One-Class Support Vector Machine", ARXIV.ORG, CORNELL UNIVERSITY LIBRARY, 201 OLIN LIBRARY CORNELL UNIVERSITY ITHACA, NY 14853, 24 March 2023 (2023-03-24), XP091467492**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Technical Field</u>

Embodiments relate to a control unit for a sensor device. Further embodiments relate to a sensor device that has a calculation unit and a sensor unit for providing sensor signals. Further embodiments relate to a method to determine sensor signals for a presence of an anomaly in the sensor signals derived whether an update of a used sensor model should be performed. More particularly, the disclosure relates to anomaly detection and mitigation for ageing and drifting of sensors, especially low cost sensors.

<u>Background of the Invention</u>

Sensors are broadly used in many applications. Amongst them, there are gas sensors, humidity sensors, temperature sensors and others. Those sensors sometimes rely on a sensor model to convert measured signals into sensor signals.

Operating sensors overtime is complex due to variations in sensor devices.

<u>Summary of the Invention</u>

According to an embodiment, a calculation unit for a sensor device is provided. The control unit comprises an interface configured for obtaining sensor signals of the sensor device. The calculation unit comprises a processing processor configured for processing at least one sensor signal by use of a sensor model. The calculation unit comprises a model processor configured for evaluating sensor signals for a presence of an anomaly in the sensor signals that indicates an ageing of the sensor device. The model processor is configured for updating the sensor model based on the presence of the anomaly to at least partially compensate for the anomaly to obtain an updated sensor model. The processing processor is configured for using the updated sensor model for future sensor signals.

According to an embodiment a sensor device comprises such a calculation unit and a sensor unit for providing the sensor signals.

According to an embodiment, a method comprises obtaining sensor signals of a sensor device. The method comprises processing at least one sensor signal by use of a sensor model and evaluating sensor signal for a presence of an anomaly in the sensor signals that indicates an ageing of the sensor device. The method comprises updating the sensor model based on the presence of the anomaly to at least partially compensate for the anomaly to obtain an updated sensor model and using the updated sensor model for future sensor signal.

Further advantageous embodiments in accordance with the disclosure are defined in the dependent claims.

Further embodiments in accordance with the disclosure are descried herein after whilst making reference to the accompanying drawings, in which,

Fig. 1    shows a schematic block diagram of a sensor device according to an embodiment;

Fig. 2    a schematic flow chart of a method according to an embodiment that may be implemented, at least in parts, by a calculation unit described herein;

Fig. 3    showing an example flow chart of a VAE-Loss approach according to an embodiment;

Fig. 4    showing an example flow chart of a VAE-Latent approach according to an embodiment;

Fig. 5a-b    show a schematic illustration and pseudocode of an anomaly detection method using a full variational autoencoder structure according to an embodiment;

Fig. 6a-b    show a schematic illustration and pseudocode of an anomaly detection method using a reduced variational autoencoder structure according to an embodiment;

Fig. 7a    shows a possible implementation of a variational autoencoder architecture described in connection with Fig. 2 in accordance with an embodiment;

Fig. 7b    shows a flowchart of a method in accordance with an embodiment;

Fig. 8a    shows two-dimensional principle components of aged sensor data for describing an embodiment;

Fig. 8b    shows two-dimensional principle components of additive drifted sensor data for describing an embodiment;

Fig. 9a    shows a latent 2D-dimension of encoded normal and aged sensor data for a variational autoencoder according to an embodiment;

Fig. 9b    shows different metrics using the two proposed approaches VAE-Loss and VAE-Latent for detecting ageing of sensor data according to an embodiment;

Fig. 10a    shows a latent 2D-dimension of encoded normal and multiplicative drifted sensor data for variational autoencoders according to an embodiment;

Fig. 10b    shows anomaly detection metrics for multiplicative drifted sensor data according to an embodiment;

Fig. 11a    shows a latent 2D-dimension of encoded normal and additive drifted sensor data for variational autoencoders according to an embodiment;

Fig. 11b    shows different metrics using the two proposed approaches for detecting additive drift on sensor data according to an embodiment; and

Fig. 12    shows a schematic flow chart of a method according to an embodiment.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

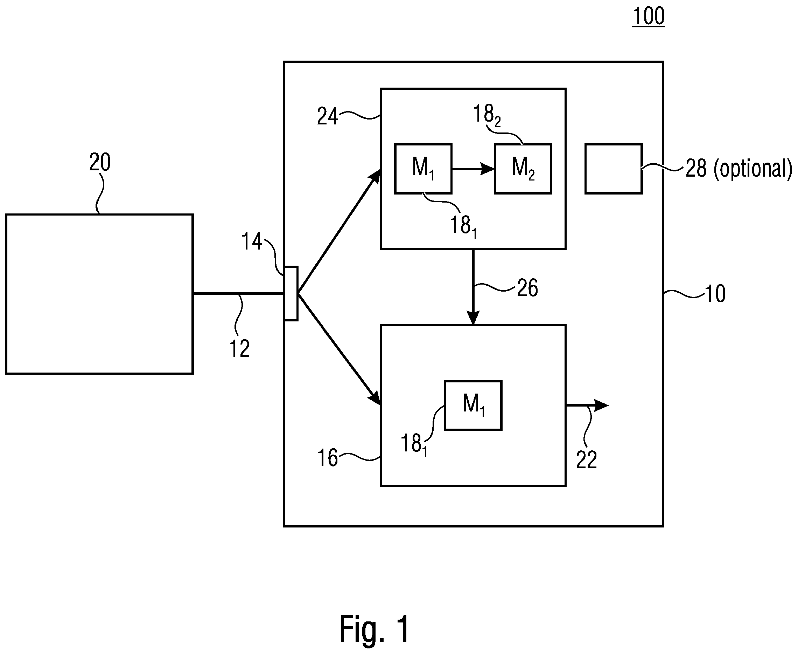

Fig. 1 shows a schematic block diagram of a sensor device 100 according to an embodiment. Sensor device 100 comprises a calculation unit 10 and a sensor unit 20 that is configured for providing sensor signals 12, for example, the sensor unit comprises at least one of a gas sensor, a temperature sensor, a humidity sensor and a pressure sensor such that the sensor signal 12 is related to the measured quantity. The sensor signal 12 may be or may comprise an electrical signal, an optical signal and/or any other type of signal.

The calculation unit 10 may be adapted to operate in the sensor device 100 but may be implemented, produced and/or shipped together with or without the sensor unit 20. The calculation unit 10 comprises an interface configured for obtaining the sensor signals 12 of the sensor device 100. For example, this may comprise to receive the sensor signals 12 from the sensor unit 20, e.g., having a connection between the control unit 10 and the sensor unit 20, e.g., a wired, wireless and/or optical connection. However, it is not necessary to directly contact the sensor unit 20 with the control unit 10. For example, the sensor unit 10 may also retrieve the sensor signals 12, e.g., from a memory or the like.

The calculation unit 10 comprises a processing processor 16 configured for processing at least one sensor signal by use of a sensor model $18_1$. For example, the sensor signal 12 received from sensor unit 20 may be processed by processing processor 16 to obtain a sensor result 22 that may indicate a result of model $18_1$ being fed with the sensor signal 12.

The calculation unit 10 further comprises a model processor 24 configured for evaluating sensor signals for a presence of an anomaly in the sensor signals. The model processor may evaluate the sensor signals for an anomaly that indicates an ageing of the sensor device 100, e.g., of the sensor unit 20. The model processor 24 is configured for updating the sensor model $18_1$ to updated sensor model $18_2$. The update may be triggered based on the presence of the anomaly to at least partially compensate for the anomaly and/or the effects obtained thereby. The processing processor is configured for using the updated sensor model $18_2$ for future sensor signals. For example, the model processor 24 may provide the updated the sensor model $18_2$ by use of a model signal 26.

However, according to embodiments the processing processor 16 and the model processor 24 may be implemented within a same circuitry or processing unit which may allow that the processing processor 16 has direct access on the determined updated model $18_2$.

Updating the sensor model $18_1$ may include various calculations that influence the updated model $18_2$. According to some embodiments, the calculation unit 10 may be configured, in connection with updating the sensor model $18_1$, for obtaining reference sensor signals for a reference sensor device and may determine an updated round of truth for the updated sensor model from the reference sensor signals, e.g., by use of the model processor 24. Such reference signals may comprise a structure, information and/or structure being known a priori such that the result the model should deliver may also be known and compared with an actual behavior of the model $18_1$.

According to some embodiments, for updating the sensor model, the model processor 24 may be configured for performing a transfer learning using the sensor model and reference sensor signals to obtain the updated sensor model. Such a transfer learning may allow to still benefit from the model $18_1$ that has been learnt previously.

According to some embodiments, the calculation unit 10 may be comprise an optional evaluation processor 28 configured for evaluating a certainty of the updated sensor model $18_2$. For example, this can comprise a comparison against a given requirement such as a maximum allowed uncertainty for the expected accuracy obtained by the updated model $18_2$. If the threshold is exceeded, a further update with other, newly gathered or additional data may be performed to have another updated model that may be evaluated again.

The evaluation processor 28 may be based on neural networks and optionally on artificial intelligence that may allow to quickly perform the evaluation. Thereby, the update sensing mechanism may be evaluated whether future data may be processed with a sufficient level of certainty, or, in other words, whether the update has been successful or not.

Details about evaluating the sensor signals for the presence of an anomaly that is related to an ageing of the sensor device 100 is explained in the following. According to embodiment, a method and a device are described that allow to detect anomalies in the measuring devices and subsequently trigger one or more anomaly-specific procedures to maintain the sensing performance overtime. The methodology described herein relates to both, the method and the device. Embodiments described herein may be applied, amongst others, to chemoresistive gas sensing entities due to the fact that such devices show a considerable amount of ageing and/drift. Nevertheless, it can also be applied to other types of gas sensors such as electrochemical sensors or a PAS (photoacoustic spectrography) sensor, and even to other sensing and measuring scenarios outside the environmental sensing field which process time series data and are subject to distribution shifts. Examples thereof are, beside the mentioned gas sensor, a temperature sensor, a humidity sensor and a pressure sensor.

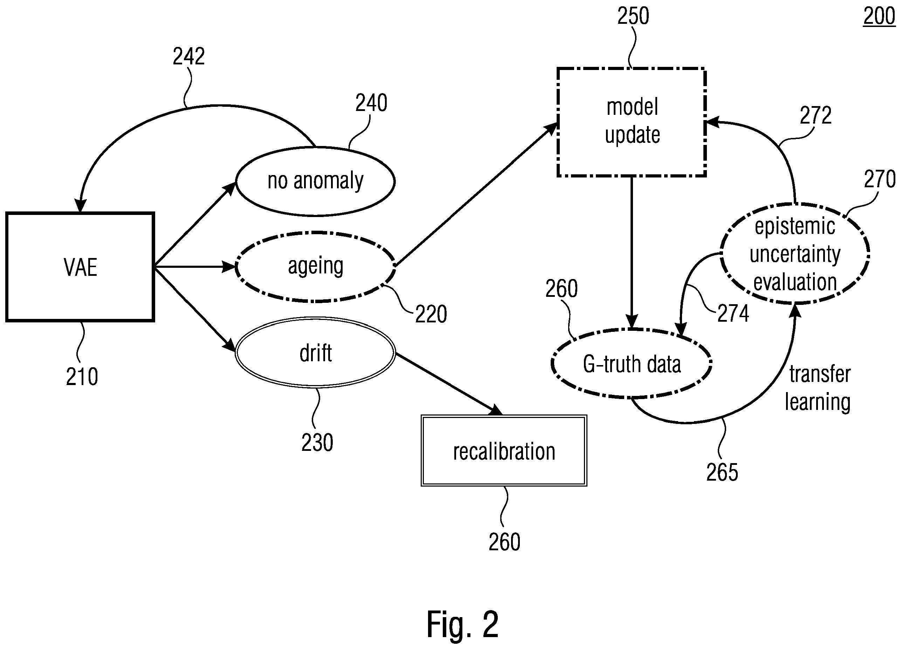

Fig. 2 shows a schematic flow chart of a method 200 that may be implemented, at least in parts, by a calculation unit described herein. At a step 210, sensor signals may be evaluated for a presence of an anomaly in the sensor signals that indicate an ageing 220 of the sensor device. For example, but not necessarily limited hereto, the calculation unit may implement, in step 210, a variational autoencoder (VAE) that may be based on a neural network and that may process temporarily dependent sensor signals, e.g., sensor signals 12, in order to predict if the signals show any type of anomalies in the sensor data such as sensor ageing 220 there may also be examined whether the sensor signals are subject to other anomalies such as a baseline drift 230. There may also be a result 240 according to which no anomaly is detected or at least no anomaly that exceeds a specific threshold that would require counter measures. Whilst detection 220 of the sensor ageing may lead to a model update 250 as described in connection with the model processor 24, a detection 230 indicating an anomaly related to the drift or baseline drift may lead to a recalibration 260 of the sensor.

Based on the model update 250, an updated ground of truth, i.e., new ground of truth data may be obtained in a step 260. For forming a transfer learning as described above may lead to an uncertainty evaluation 270 as described in connection with the evaluation processor 280. This may lead to an updated model along a path 272 or, in case of having insufficient certainty of the updated sensor model, e.g., when the described threshold is exceeded, another update may be performed along path 274.

An absence of an anomaly detected in step 240 may lead to a return to step 210 to provide for another iteration of processing the sensor signals.

In other words, the shown detection method is realized in the form of a neural network-based variational autoencoder, VAE, architecture, which may process the temporarily dependent sensor signal in order to predict, if the signal show any type of anomalies in the sensor data such as sensor ageing or baseline drift. If such anomaly behavior is detected, additional steps of predictive maintenance are started, depending on the anomaly type.

If sensor ageing 220 is detected, then the sensing mechanism itself may be updated by performing a model update 250. If a baseline drift is detected, then the input data of the sensing mechanism or sensing algorithm may be recalibrated with a suitable recalibration approach.

In order to perform a model update for an age sensor, a set of different methodological steps may be used

- new (ground-truth) data 260 may be connected by using a reference device creating accurate labels of the targeted measuring quantity alongside the measurement from the aged device;
- the newly gathered data may then be used to perform a transfer learning procedure 265 by training the old sensing mechanism with the new data on the top of the old model;
- an explainable artificial intelligence AI, technique may be used in order to estimate, if the updated sensing mechanism predicts new data with a sufficient level of certainty as described in connection with the evaluation processor 28 and the evaluation 270. This can be for instance quantified by using epistemic uncertainty evaluation;
- This procedure may be repeated until a predefined certainty level threshold is reached.

For the ageing 220, different approaches may be used, two of them explained hereinafter. Both approaches allow to detect anomalous sensor data and both approaches are based on the VAE architecture.

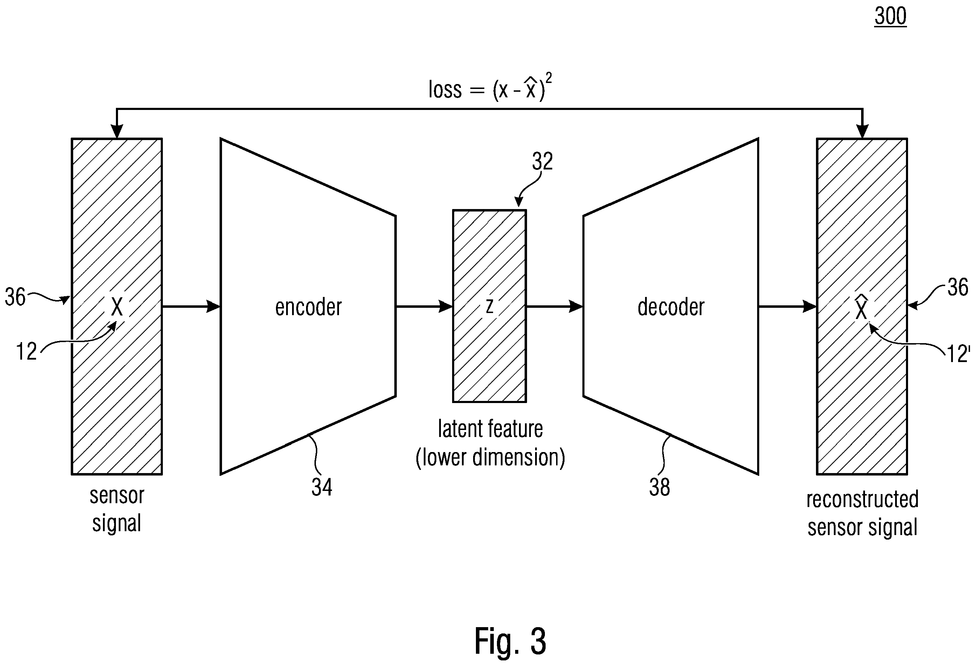

In a first approach that may be referred to as VAE-Loss, a complete VAE structure may be used to detect anomalies based on reconstruction error during model interference according to the steps described in connection with Fig. 3 showing an example flow chart of a VAE-Loss approach 300.

Therein, the original data, i.e., sensor data 12, in particular, a set of a plurality of instances of collected sensor data or a measurement data is met to a lower-dimensional latent space 32 by use of an encoder 34. In the lower-dimensional latent space 32 anomalies and normal data are expected to be separated which will be explained later. The encoder 34 may form a part of the model processor 24 and may be configured for encoding the sensor signals to the latent space 32.

Afterwards, the data may be remapped from the lower-dimensional latent space 32 to the original data space 34, which may called the reconstruction of the original data 12 based on a decoder 38, providing reconstructed sensor signals 12'.

A reconstruction error that may be based as a difference between the sensor signal 12 and the reconstructed sensor signal 12', e.g., by having a quadratic value of the difference, e.g., $(x, \hat{x})^2$ may be used as an anomaly score to detect anomalies. Data points with higher reconstruction errors may be considered as anomalies, whereas data points with lower reconstruction errors may be considered as non-anomalies. A threshold of the difference may be application specific. The lower the threshold the higher the rate of a model update and the required effort for the sake of a higher accuracy of the sensor.

Following such an approach, the encoder 34 may be comprised by a model processor 24 and may be configured for encoding the sensor signals 12 from a sensor signal space to a latent space, wherein the model processor 24 comprises the decoder 38 configured for decoding the encoded signals to the sensor signal space to obtain restored sensor signals 12'. The model processor 24 may be configured for determining a measure, e.g., the described loss as the quadratic distance, for determining a measure associated with a mismatch between the sensor signals and the restored sensor signals. The model processor 24 may be configured for determining the presence of the anomaly based on the measure being at least a predefined threshold.

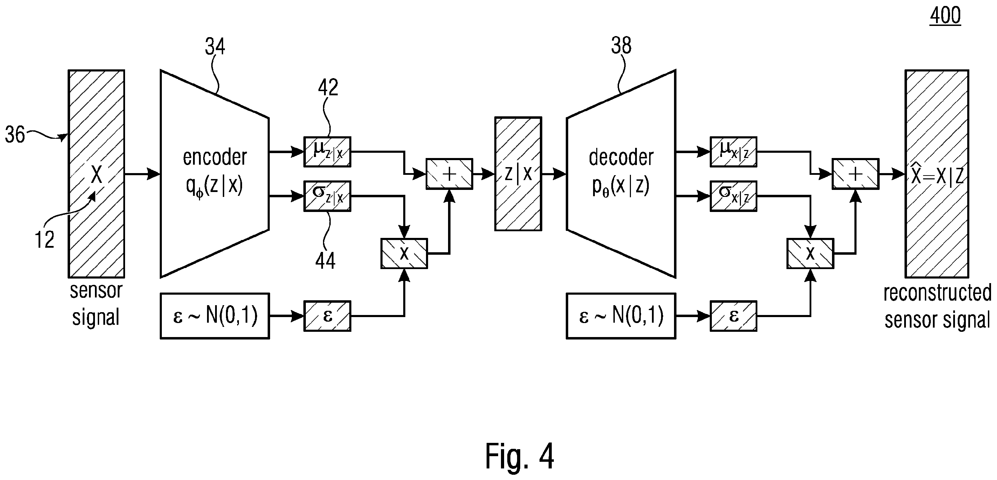

Another approach is described in connection with Fig. 4 which may be referred to as VAE-Latent. This approach may leverage the probabilistic encoder structure to generate Gaussian distributions in the latent space for each data point that may be characterized by mean and variance. According to the approach, the anomalies may then be classified based on the respective distance to mean and variance. When referring to Fig. 4 showing a schematic flow chart of a method 400 to implement this VAE-Latent approach, the encoder 34 may be use to map the normal data set 12 from the data space 36 to a lower dimensional latent space parametrized by Gaussian probability distribution having mean 42 and variance 44.

The mean 42 of the outputs, e.g., cluster centrals, of the encoder 34 using the normal data set 12 may be calculated. The distance to the cluster centrals of the normal data to the encoded data samples of the normal and anomalous test data may be calculated. Further, if the threshold distance to the cluster centrals is exceeded, then the data sample is labelled as an anomaly, if not then the data sample is labelled as normal data or at least not labelled as anomaly. Such a labelling may be inverted, e.g., data that is not labelled as normal or acceptable data may be understood as anomalous data and data not labelled as anomalies data may be understood as normal data.

The encoder of Fig. 3 ma provide for output z whilst the encoder in Fig. 4 may provide for output mean 42 and variance 44 of the (Gaussian) data distribution. Therefore, the parameters of the blocks and their architecture might differ after optimization for best performance.

An autoencoder as described herein may have the goal to encode the data at the input layer (sensor data) into a latent space representation before it is used for reconstructing the original input data at the output layer with as minimal information loss as possible. P-dimensional input signals are first maps to a lower-dimensional space z (also called latent space) using an encoder function f(.). These signals are then mapped to P again using a decoder function g(.) indicated by reference sign 36 in Fig. 3. To best reconstruct the original input f(.) and g(.) can be any type of neural network such as a recurrent neural network, a feed forward neural network or the like.

Thus, the objective function training and autoencoder is based on the difference between the input and the output, according to some suitable difference measure such as root mean square error, RMSE, mean absolute error, MAE or the like. Figs. 3 and 4 illustrate working architectures of such an autoencoder.

In the scope of the disclosure, variational autoencoders, a probabilistic extension of conventional autoencoder, may be used to detect distribution shifted sensor signal such as ageing and optionally drifting. The ideas is to leverage structures and properties of the latent space representation to visually cluster the high-dimensional sensor signals to differentiate between correct and corrupted sensor signals. Variational autoencoders, VAE, are based on the probabilistic concept of variational Bayesian inference and introduce a probabilistic methodology to the latent space. Thus, rather than the encoder output being deterministic the encoder describes a probability distribution for each latent variable. The decoder is then used to reconstruct a latent vector by sampling from the encoder's defined distributions.

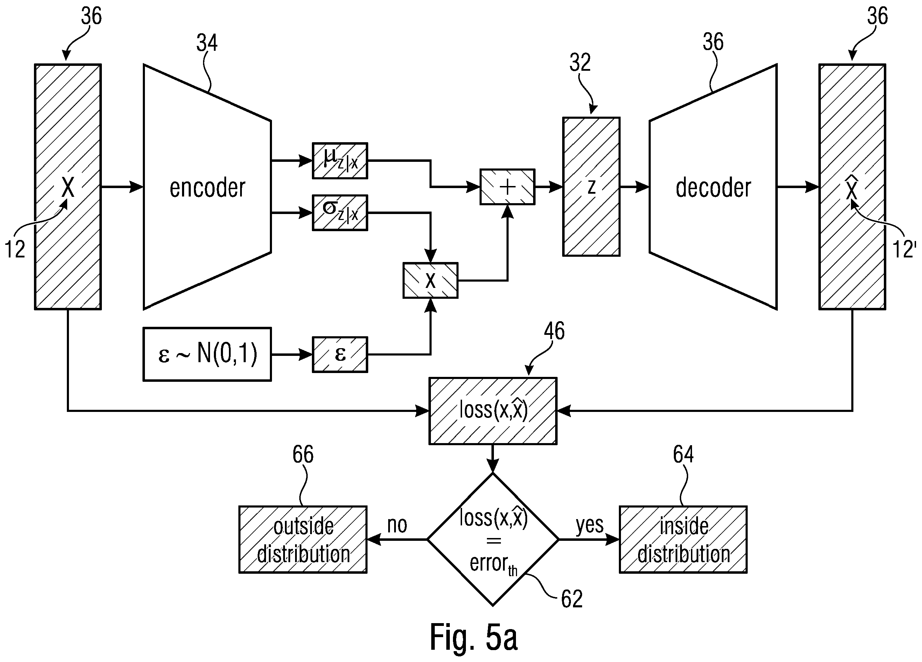

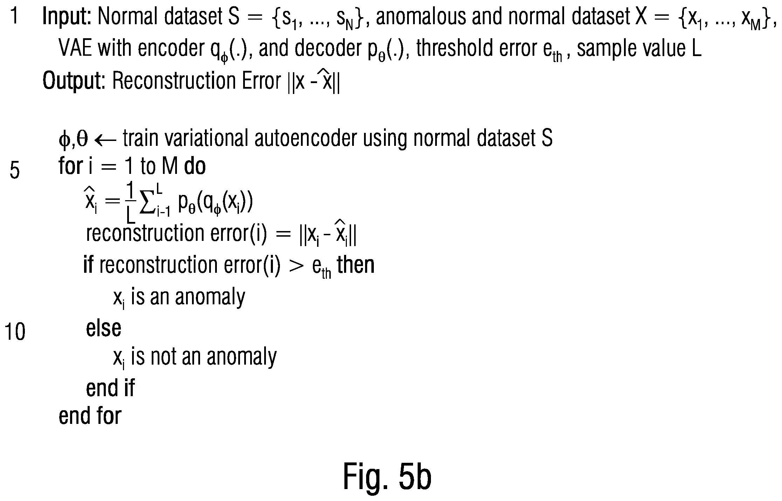

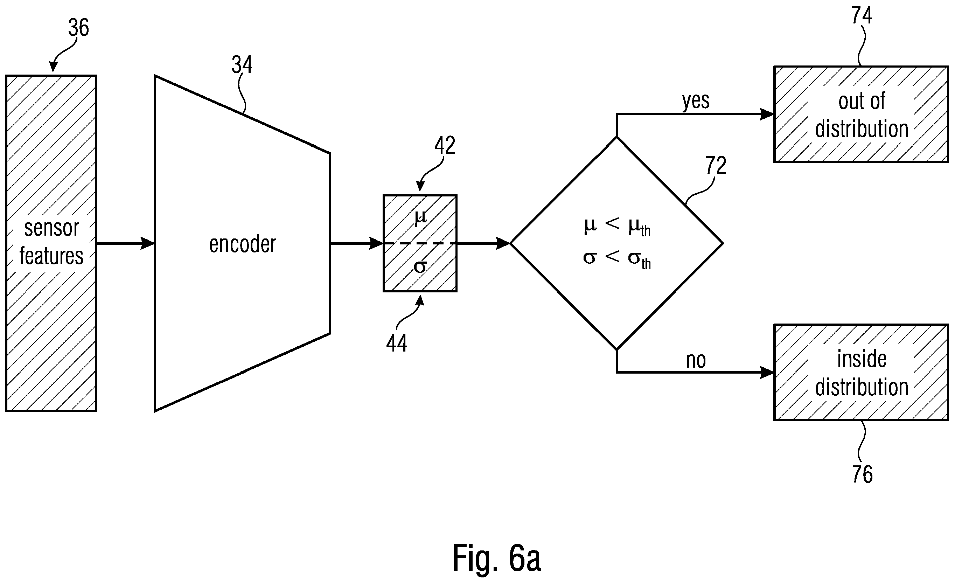

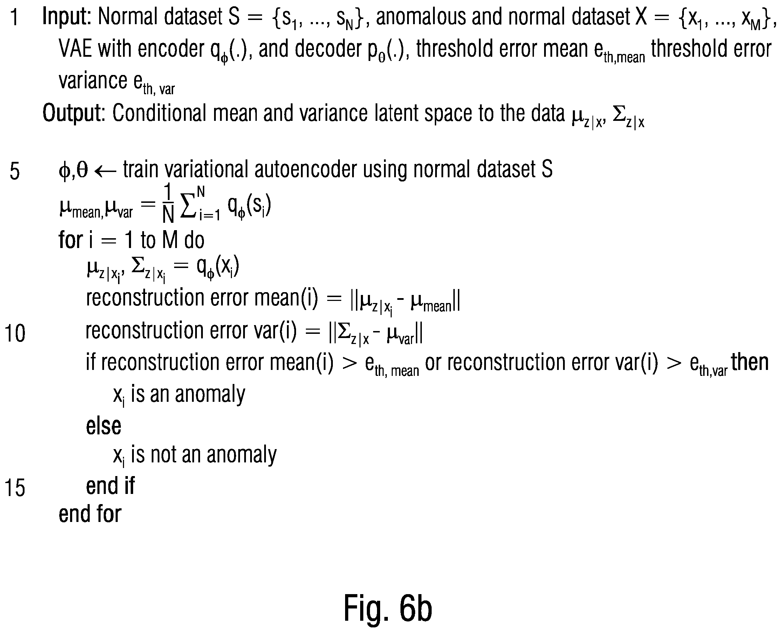

In connection with Figs. 5a and 5b an example approach for detecting anomalous sensor data is presented. A different approach is described in connection with Figs. 6a and 6b. Both approaches may be used to implement embodiments described herein, e.g., in the calculation unit 10. The anomaly detection may be conducted by training the VAE by mostly or only using normal data for training. The probabilistic encoder q(.) may parameterize a normal distribution within the latent space with learnable mean and variance. In contrast, the probabilistic decoder p(.) may output, e.g., only, the reconstructed mean of the latent variable z|x introducing these stochastic properties may allow for increased robustness and may serve as a regularization term.

In the first approach, the complete VAE structure may be used to detect anomalies based on reconstruction error during model inference. The first approach that may be based on the structure illustrated in Fig. 3 may map the original data to lower-dimensional latent spaces where anomalies and normal data are expected to be separated. Afterwards, the data is remapped from the lower-dimensional latent space to the original data space 36, which may be called the reconstruction of the original data. The reconstruction error 46 between the original data 12 and its low-dimensional reconstruction 12' may be used as an anomaly score to detect anomalies. Data points with higher reconstruction errors may be considered as anomalies, whereas starter points with reconstruction errors may be considered as non-anomalies. This is indicated by decision 62 determining whether the loss $(x, \hat{x})$, i.e., the error score is below or exceeding an error threshold error index th. If this is not the case, the loss is smaller than the threshold, then the data point is inside the distribution 64, or else it is outside the distribution 66.

Fig. 5b shows an example pseudo code for implementing at least a part of the functionality described in connection with 5a.

The approach described in connection with Fig. 5a and Fig. 5b utilizes both the encoder 34 and the decoder 38 which may consume a lot of storage space (for the data) and may also be computational expensive, such that there may be a goal to reduce said effort, e.g., for tiny machine learning, ML, applications that are ideally embedded into microcontrollers. Therefore, in connection with Figs. 5a and 5b, another approach is described that may operate by only use the encoder to determine normal and anomaly data. The approach may leverage the probabilistic encoder structure to generate Gaussian distributions in the latent space for each data point that are characterized by mean 42 and variance 44. According to the approach, the anomalies may then be classified based on the respective distance to the mean outputs of the encoder based on the data set consisting of only normal data, e.g., the sensor data or sensor features. Such an approach may require only half the parameters and half the computational costs (at least approximately) as the approach shown in Fig. 5a.

In other words, Figs. 5a and 5b show pseudocode and an illustration of an anomaly detection algorithm using a full variational autoencoder structure.

A method according to the VAE-Latent proposal is illustrated in Fig. 6a. The anomaly detection may be conducted by training the VAE only using normal data for training. The probabilistic encoder q(.) may parameterize a normal distribution within latent space with learnable mean 42 and variance 44. It may then be possible to monitor the resulting mean and variance and then classify anomalous and normal data based on the distance to the mean output of the encoder which is represented by decision 72 determining whether the mean $\mu$ and/or the variance $\sigma$ are below a respective threshold $\mu_{th}$, $\sigma_{th}$ respectively. This may lead to a result whether the sensor data is out of distribution 74 or inside the distribution 76.

Fig. 6b shows a schematic illustration of pseudocode for implementing at least a part of the method or VAE encoder of Fig. 6a. Fig. 6a and Fig. 6b show pseudocode and an illustration for anomaly detection using the encoder structure.

When referring to Fig. 6a, the model processor 24 of the calculation unit 10 may comprise an encoder 34 configured for encoding the sensor signals 12 to a latent space. The model processor 24 may be configured for determining a measure associated with a mismatch, e.g., the distance, between the encoded sensor signals on the hand and a benchmark such as cluster centrals of the normal data, on the other hand. The model processor 24 may be configured for determining the presence of the anomaly based on the measure being at least a predefined threshold. For example, the encoder 34 may be configured for determining a first cluster central in the latent space of a benchmark data set, e.g., the normal data set, and for determining a second cluster central in the latent space of the sensor signals. The encoder 34 may be configured for determining the measure based on a relationship such as a difference and/or a ratio, between the first cluster central and the second cluster central.

Both approaches described herein may rely on a control unit where the model processor 24 may comprise a neural network to provide at least an encoder of a variational autoencoder structure or is adapted for a principle component analysis. The principle component analysis, PCA, may be considered as an alternative to the encoder implemented via a neural network although not necessarily operating a neural network. A PCA may be understood as a linear transformation into a new coordinate space with a reduced dimensionality. However, such a principle forms an alternative to the VAE structures described herein. Embodiments further relate to a mitigation of ageing by use of a model update. As explained, a sensor may be subject to different effect such as drift and ageing. Some embodiments relate to mitigate both effect, i.e., the drift and the ageing. Such embodiments may benefit from distinguishing between the different effects and/or causes of the effects.

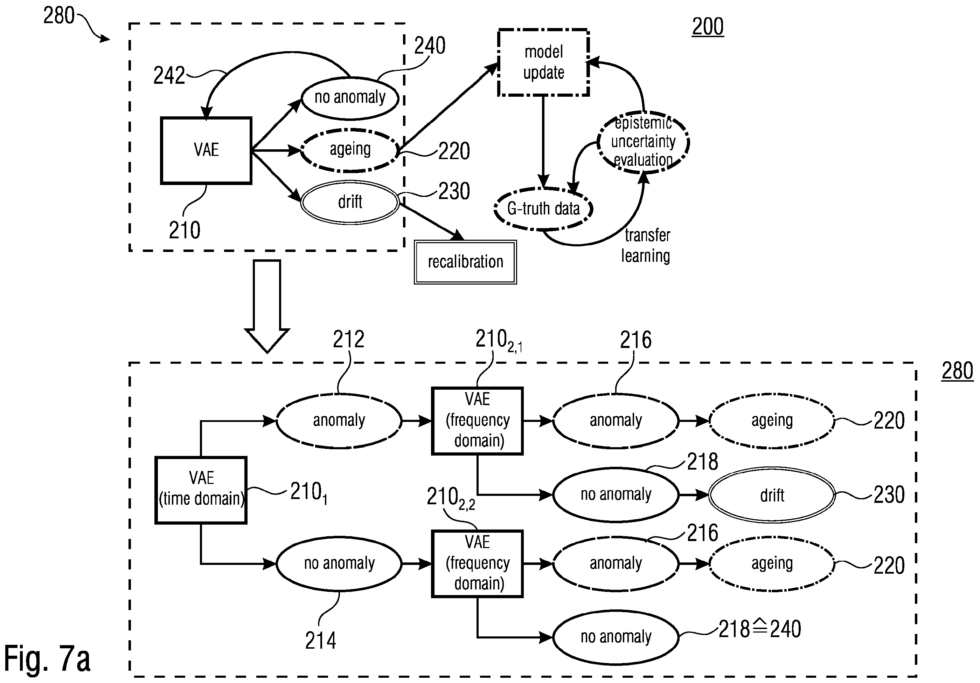

In Fig. 7a, there is shown an implementation for a variational audioencoder architecture according to an embodiment that may be used in a calculation unit described herein to detect a drift and ageing data. This is based on the recognition that a sensor drift affects only certain features such as the time domain features, e.g., as the sensor sensitivity whilst sensor ageing may affect all features, i.e., both the time domain features and the frequency domain features.

Fig. 7a shows a possible implementation 280 of the variational autoencoder architecture 210 described in connection with Fig. 2. According to the embodiment shown in Fig. 7a, two different VAE structures or architectures $210_1$ and $210_2$ may be used, structure 210, examining the time domain features and structure $210_2$ examining the frequency domain features.

According to embodiments, time domain features may be extracted directly from the sensor signals, e.g., from raw data such as resistances, after normalization to the baseline and may comprise or consist of sensitivity and derivative/slope of the normalized signals. Frequency domain features may be extracted after transformation to the frequency domain, e.g., using an FFT and may comprise or consist of amplitude and phase information, e.g. of the main subcarriers present in the signal response and/or of the Total Harmonic Distortion, THD.

As may be seen from Fig. 7a, the model processor 24 may be configured for determining the presence of the anomaly, the ageing, as a presence of a first anomaly 212 and for evaluating the sensor signals for a presence of a second anomaly that is related to a sensor drift. The calculation unit 10 may be configured for recalibrating the sensor device using a base line recalibration mechanism. That is, a presence of the time domain based anomaly 212 and an absence of the frequency domain anomaly may lead to an identification of the drift 230. According to the embodiment, the model processor 24 may be configured for performing an evaluation of time domain features, see VAE $210_1$, of the sensor signals to determine the presence of the second anomaly and for performing an evaluation of frequency domain features in VAE $210_2$ of the sensor signals for determining the presence of the anomaly related to the ageing. According to some embodiments, the model processor 24 may be configured for associating the presence of the sensor drift with a presence of an anomaly in the time domain features and with an absence of an anomaly in the frequency domain features. Alternatively or in addition, the model processor 24 may associate the presence of sensor ageing with the presence of an anomaly in the frequency domain features.

Although showing two different instances $210_{2,1}$ and $210_{2,2}$ of the frequency domain related VAE, a single distance thereof may be used according to an embodiment. Such a single instance may be fed or input the result of the time domain analysis obtained by VAE $210_1$. However, by showing two instances $210_{2,1}$ and $210_{2,2}$ the four possible outcomes of the binary decision may advantageously be presented, i.e., a yes/no decision whether the time domain analysis results in a detected anomaly and for each of both results a binary decision whether the frequency domain analysis results in a detected anomaly. This may result in states "anomaly detected" 212 or "no anomaly detected" 214 as results for the time domain analysis. And results "anomaly detected" 216, "no anomaly detected" 218 respectively with regard to a result of the frequency domain analysis.

Regardless whether having determined an anomaly in the time domain at state 212 or no anomaly in state 214 and when detecting an anomaly in the frequency domain to arrive at result 216, the structure may determine that ageing is present, see step 220 in Fig. 2. If no anomaly is detected in the frequency domain (result 218) then depending from result 212 or 214, either a drift may be present (result 230) or no relevant anomaly is detected (result 240).

That is, the first autoencoder 210, may detect anomalies in the drifting features, e.g. the time domain features, the second autoencoder $210_2$ may detect anomalies in the remaining features, e.g., the frequency features. Based on the outcomes of both variational audioencoders 210, and $210_2$, it may then be decided whether drift, ageing or no anomalies are present in the data. That is, Fig. 7a shows a variational autoencoder flow for ageing and drift detection.

Identifying the type of anomaly may be of importance for taking further measures to compensate changes that happened to the sensor on a physical level with the means of corresponding algorithm choices or calculations/amendments to be made. In the case of drift, the measured signal can be recalibrated (step 260 in Fig. 2), e.g., with a base line recalibration mechanism to scale the signal back into the calibrated range of the model.

In case of ageing, the signal may be affected non-linearly and both time domain and frequency domain features may be affected at the same time with individual impact. To compensate, the model may be adjusted to the new physical state of the sensor. Depending on the availability of reference values, the following procedures are possible.

According to an embodiment, ground-truth samples from a reference device are available. This embodiment may be of particular advantage, especially if a concept drift is observed where the mapping between labels and features has changed. In this case, the ground-truth samples alongside the data from the aged device can be used to update the model. In this case, transfer learning can be used to make use of the previously trained model and to account for the possibly low number of update data samples in this process. In order to ensure the quality and suitability of the updating process, a model can be used which not only outputs a sensor prediction such as a gas prediction in a case of a gas sensor, but also its prediction uncertainty. If the model update process has been successful, the prediction uncertainty should have decreased. If the prediction uncertainty did not decrease, a further update with more reference data might be considered as described in connection with Fig. 2.

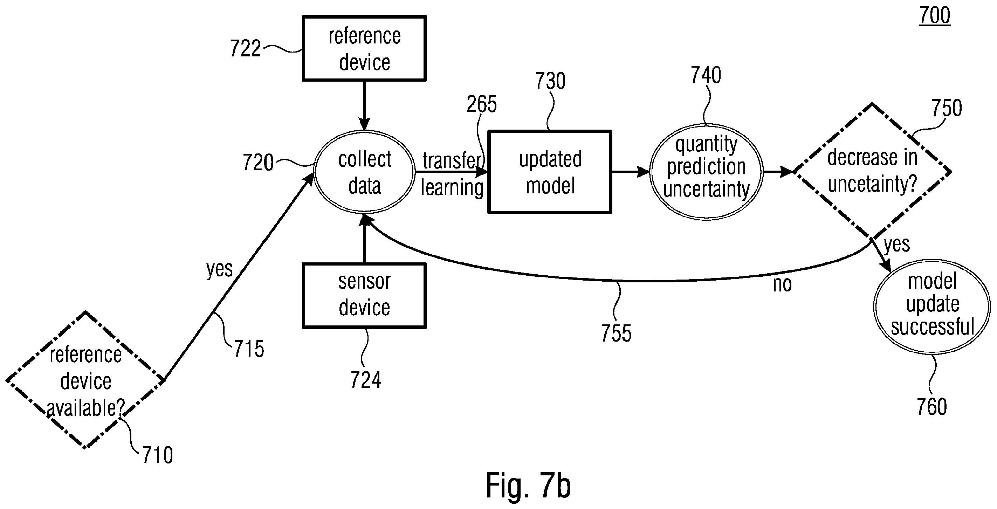

In Fig. 7b there is shown a flowchart of a method 700 in accordance with an embodiment. Reference is made to Fig. 2 that provides a basis for the model update described hereinafter. After having detected a necessity to perform the model update, e.g., as a result of 220, it may be determined 710 whether reference data, e.g., from a reference device or from calculations is available. If so (yes 715) data may be collected in a step 720, e.g., data received 722 from the reference device and/or data received 724 from the sensor device. With regard to data received from reference device 722, this may allow to obtain the ground truth data 260. This may provide for a basis for the transfer learning 265 which may result in a step 730 to have an updated model. Quantity prediction of uncertainty in a step 740 may correspond to step 270. A decision whether the uncertainty is decreased may lead to an end of the process as the model update may be considered to be successful in 260. Else if there is no or insufficient decrease, a path 755 may lead back to data collecting in 720 in which other, additional or same data is collected.

After successful model update/calibration, the threshold for anomaly detection of the variational autoencoder may be updated to accommodate for the current now calibrated/updated state. This way further drift or ageing will again result in an anomaly at the variational autoencoder detected by use of branch 242 in Fig. 2. The update of the VAE can be achieved through a transfer learning procedure on the VAE by using the anomalous data which the model has been updated to account for.

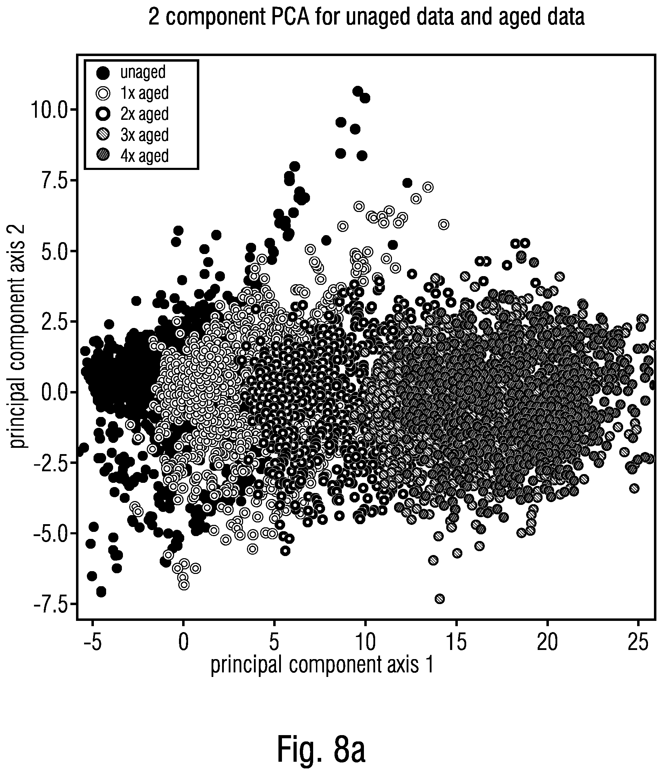

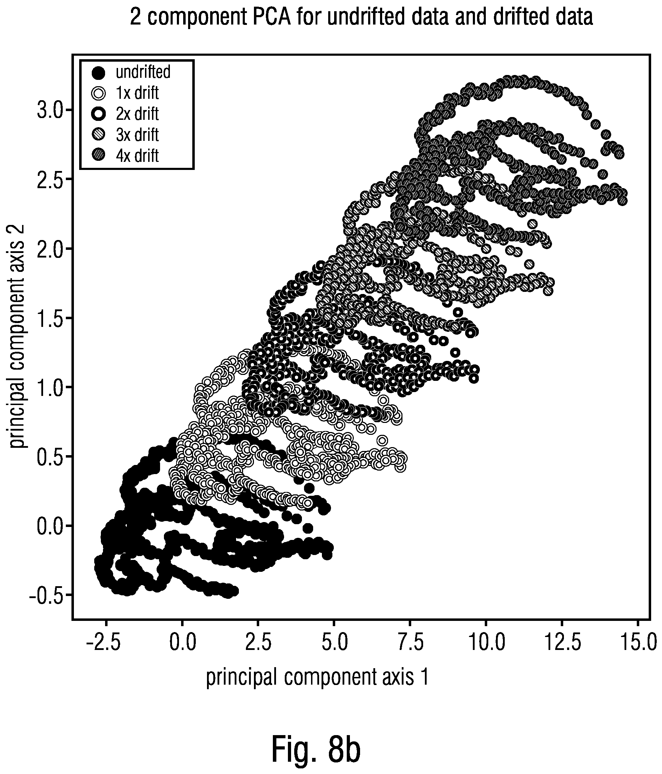

Embodiments allow to address the issue that traditional sensing mechanisms have the rather common assumption that the sensor signal for the initial parameter setting (training data) and the data in the application case (test data) are sampled from the same distribution, which would mean that the input feature space and the target data domain are equivalent. However, this assumption is often limited in real-life applications, due to the sensors intrinsic structure changing during its operation lifetime. Distributional shifts such as sensor drift and sensor ageing introduce a shift in data distribution when the sensor, e.g., gas sensor, is deployed in the environment. The adjusted or trained machine learning mechanisms are therefore prone to the effects of distributional shifts. The effects of such distributional shifts are visualized in Figs. 8a and 8b.

Fig. 8a illustrates two-dimensional principle components of aged sensor data. It is noticeable that points representing the same ageing state are clustered together. The amount or times of ageing is selected as a non-limiting example only and does not represent a specific time scale. With increasing sensor ageing, the sensor data clusters may shift, to the right, highlighting the change in distribution.

Furthermore, Fig. 8b illustrates two-dimensional principle components of additive drifted sensor data. Points representing the same drifting state are clustered together. Figs. 8a and 8b empirically show that sensor ageing and sensor drift change the data distribution differently, which means that they cause different effects and therefore may be handled differently.

In order to compensate for these distributional shifts, mechanisms to reliably detect and re-adjust or calibrate the sensing mechanisms are provided by the underlying disclosure. The embodiments provide for a benefit in order to ensure accurate measurement capabilities of the technology. According to this disclosure, there is addressed a mechanism which can achieve a proper compensation strategy tuned towards the concrete type of distribution shift.

The disclosure is originated by the concrete need to stabilize chemoresistive gas sensors which are extremely prone to drift and ageing of their response in both time and frequency domain. Nevertheless, it is noted that the distribution shift issue is common also to other sensing applications which deal with time series data such as pressure sensors, ultrasonic sensors and the like, and where the initial calibration model may become obsolete over time and after the deployment of the sensor in real-world scenarios. Whilst simple machine learning methods have been used in predictive maintenance, for instance in the case of IoT (Internet-of-Things) and industrial applications and also electrochemical gas sensors, see [1]. However, the autoencoder-based concepts and/or PCA-based concepts may provide for an advantage over said concepts.

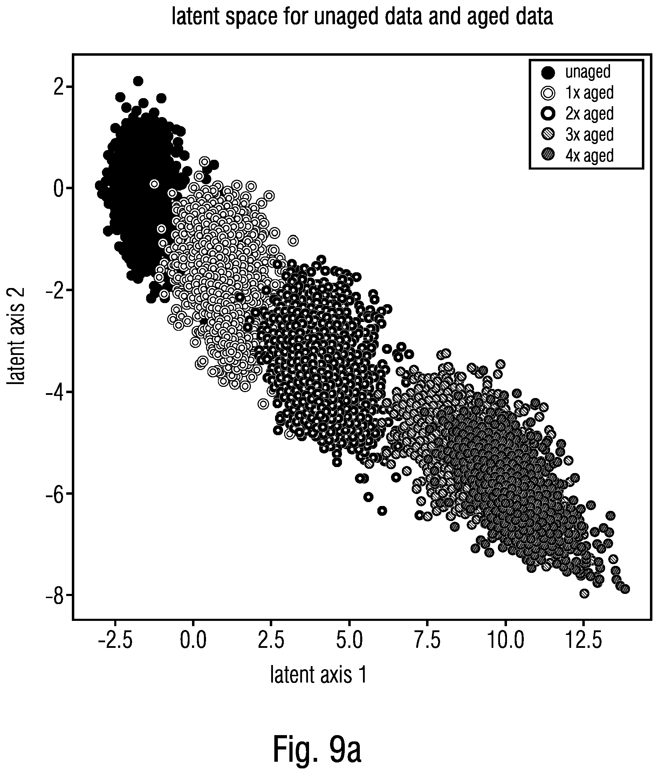

For solutions described herein, in the following, there are provided example measurement data. In the figures, there is shown the good separability of measurement data using the encoder of the VAE for increasing ageing states of the sensor data. In Fig. 9a, there is shown a latent 2D-dimension of encoded normal and aged sensor data for a variational autoencoder.

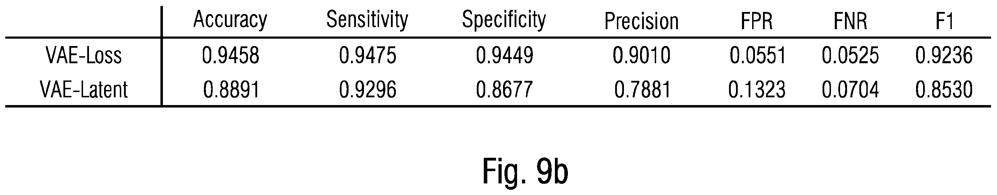

Fig. 9b shows different metrics using the two proposed approaches VAE-Loss and VAE-Latent for detecting ageing of sensor data. The metric comprise an accuracy, a sensitivity, a specificity, a precision, a false positive rate, FPR, a false negative rate, FNR, and an F1 score. It may be seen that for detecting ageing sensor, the VAE-Latent approach only slightly degrades over the VAE-Loss approach whilst saving approximately half of the computational power.

Two different approaches of the VAE are tested. On can observe in Fig. 9a that a small portion of an unaged data cluster is intersected with the one-time aged data cluster with VAE. It may also be debatable that the change of data distribution introduced by the first ageing state could even be neglected in the assessment since the ageing effects are not that strong and those would not be considered as anomaly.

VAE-Loss out performs VAE-Latent and Support Vector Machines,SVM. VAE-Latent performs slightly worse than VAE-Loss across all metrics. This can be attributed to VAE-Latent using only the model's encoder structure and thus only utilizing half the model parameters. Furthermore, VAE-Latent has two threshold errors to be modified (mean threshold and variance threshold), whereas VAE-Loss has only one threshold value, the threshold loss. Nevertheless, the sensitivity quantifying the probability that a data instance labelled as an anomaly is genuiely an anomaly is similar in VAE-Loss and VAE-Latent which might indicate that both pattern recognition systems are comparable in the latter task. Furthermore, the corresponding low FNR for VAE-Loss and VAE-Latent also underlines the similarities.

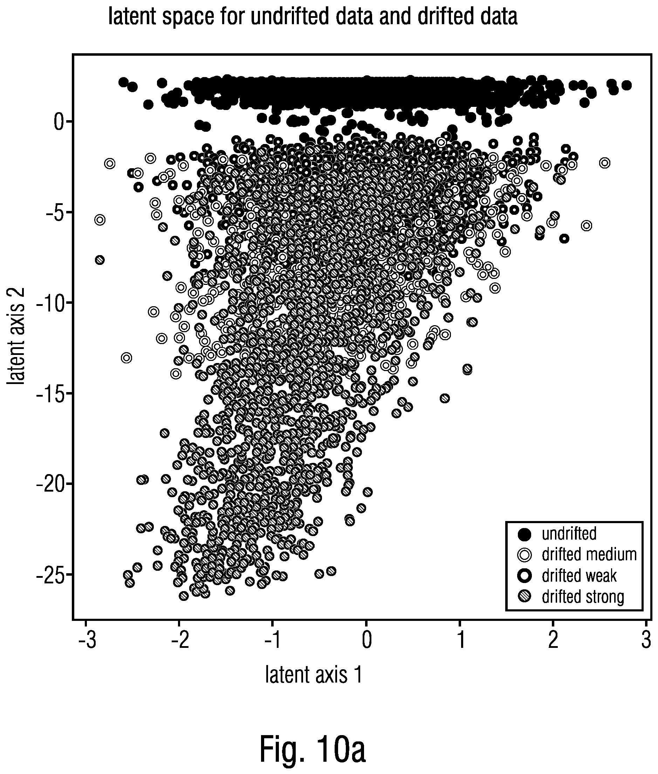

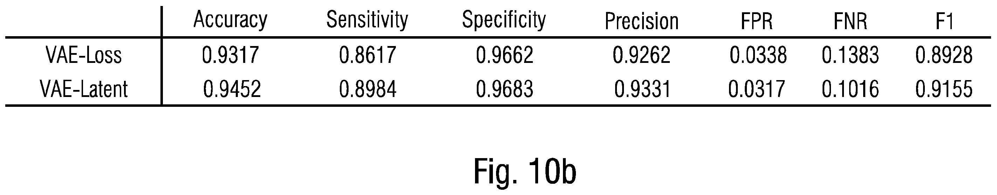

Fig. 10a shows a latent 2D-dimension of encoded normal and multiplicative drifted sensor data for variational autoencoders. Fig. 10b shows anomaly detection metrics for multiplicative drifted sensor data.

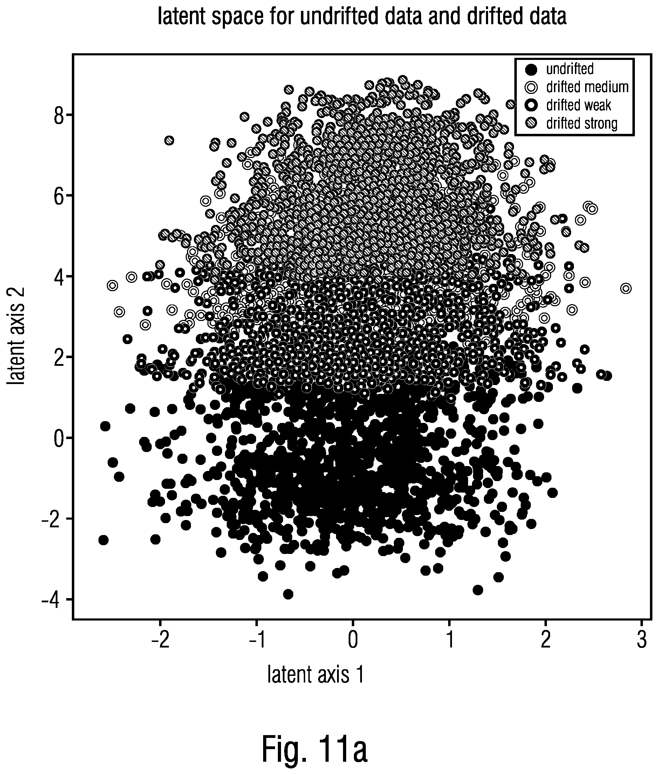

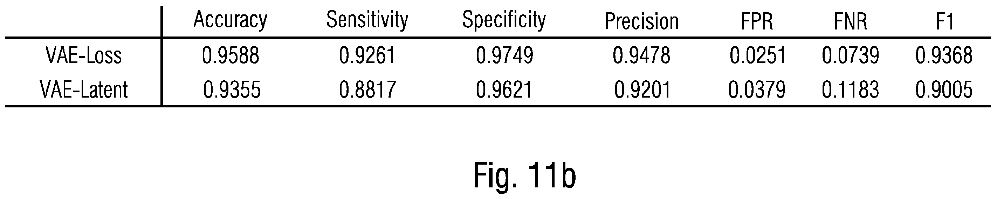

Fig. 11a shows a latent 2D-dimension of encoded normal and additive drifted sensor data for variational autoencoders. In Fig. 11b, there are shown different metrics using the two proposed approaches for detecting additive drift on sensor data.

The VAE-Latent may sometimes tend to miss-classify normal data as anomaly data. This may be seen due to the lower specificity values with 86.77 % compared to 94.49 % in Fig. 9b and the higher FPR values for VAE-Latent with 13.23 % compared to VAE-Loss with 5.51 %. The precision metric shows that VAE-Loss can identify a high number of anomalies among all classified data samples at 90.1 %. However, VAE-Latent performs slightly inferior at 79.81 %. Last but not least, the F1 score and accuracy metric, which assess the overall performance on the classifiers, indicate that VAE-Loss performs the best. As the considered metrics indicate, VAE-Loss and VAE-Latent both seem to perform reasonably well in anomaly detection due to their reasonably high precision and recall scores. The goal may be to find or retrieve the anomaly data. In this context, the proposed VAE-based anomaly detection methodologies outperformed traditional ML-based counterparts. The VAE-Latent space allows for high separability between aged and unaged sensor data. Furthermore, it is shown that performing anomaly detection methodologies in the latent space with a reduced VAE structure by only using the encoder may be successful and can be considered for saving computational cost and memory by sacrificing small amounts of performance. Loss-based anomaly detection with VAE may perform the best, which might be attributed to the higher number of parameters. However, due to the high sensitivity, latent-based anomaly detection with VAE might yield a satisfactory performance for deployment.

For multiplicative drift and additive drift data detection similar results to detecting aged sensor data is observed. However, VAE-Latent may be superior for detecting drifting sensor data than aged sensor data.

This might be attributed that sensor drift is more straightforward and intuitive than sensor ageing which has multiple underlying effects that have a more complex structure which is more difficult to capture by VAE-Latent architecture with less parameters. In the following, additional information on VAEs are provided.

Additional Information on VAEs

The VAE assumes that data set X = {$x_{1,2}$, ..., $x_N$} are N i.i.d. (independent and identically distributed) samples with probability density function p(.). The assumption is to generate unseen samples $x \notin X$ with respect to the unknown distribution (.).

Another assumption is that the data is also dependent on the latent value z, which is generated from a prior probability distribution $p_\theta(z)$. Then, a value x is generated from conditional distribution $p\theta(x|z)$. The VAE assumes that conditional distribution (x|z) is parameterized by parameters $\theta$ and that their probability density functions are differentiable with respect to $\theta$ and z. The true parameters $\theta$ and the values of latent variable z are unknown. The original distribution of the data can be described as follows by marginalization and Bayes rule $p_\theta(x) = \int p_\theta(x|z)\, p_\theta(z) dz$ as well as the posterior distribution of the latent variable with respect to x: $p_\theta(z|x) = p_\theta(x|z)\frac{p_\theta(z)}{p(x)}$. However, (x) and $p_\theta(z|x)$ are intractable distributions. These distributions are approximated and learned with neural networks. In order to approximate intractable distribution (z|x), a support distribution $q_\phi(z|x)$ is introduced. In the context of variational autoencoding, the support distribution (z|x) represents the probabilistic encoder. The encoder may output a distribution over the possible values of latent vector z from which x could have been generated, given a data point x in the training set. Furthermore, distribution (x|z) describes the probabilistic decoder that, given a sample z from the latent space, reconstructs the input x by sampling from the probabilistic decoder. The decoder may output a distribution over the possible corresponding values of x. In the VAE architecture, the probabilistic encoder does not output the sampled value of the distribution z but rather the distribution itself. The encoder and decoder network can generally be any type of neural network, but a common choice are feed-forward neural networks. The parameters $\theta$ and $\phi$ represent the parameters of the posteriors (z|x) and $p_\theta(x|z)$ by a neural network respectively.

The VAE may be trained using following Loss function:

$$\mathbb{L}(\theta, \phi; x) = \mathbb{E}_{q\phi(Z|x)}[\log p_\theta(x|z)] - D_{KL}(q_\phi(z|x)\|p_\theta(z))$$

with following distributions:

$$p_\theta(z) = N(0,1)$$

$$p_\theta(x|z) = N(\mu_{x|z}, \sigma_{x|z}I)$$

$$q_\theta(z|x) = N(\mu_{z|x}, \Sigma_{z|x})$$

with $\eta_{z|x} = [\eta_1, \eta_2, ..., \eta_N]^T$, $\sigma_{z|x} = [\sigma_1, \sigma_2, ..., \sigma_N]^T$, $\eta_{x|z} = [\eta_1, \eta_2, ..., \eta_M]^T$ and $\Sigma_{x|z} = \sigma_{x|z}I$, where $\sigma_{x|z}$ is a constant. $\eta_{z|x}$, $\sigma_{z|x}$, and $\eta_{x|z}$ are parametrized by the neural network. The distribution's from above can be changed to any distribution. However, Gaussian distribution is the most common choice and are used in this implementation.

The first term of the loss function is the logarithm of the probability density of generated output given the latent sample $z$ over the negative expected reconstruction error. The expected reconstruction error is a loss term that describes how the output replicates the input. The second term of the loss function denotes the Kullbak-Leibler (KL) divergence of the support distribution $(z|x)$ with respect to the prior $p_\theta(x|z)$. The KL divergence can be considered as a constraint under which the data has to be reconstructed and to which extent the model has to update the parameters to accommodate new observations. KL divergence in the loss function encourages robustness to small perturbations along the latent dimension by inducing the probabilistic encoder $(z|x)$ to match prior $p_\theta(z)$. By choosing a conjugate prior over $z$ such that the KL divergence can be analytically integrated a closed-form solution for Equation can be obtained. A possible choice for such conjugate prior that is also used in the scope of this invention disclosure is a standard multivariate normal distribution. Other distributions, such as Gaussian mixture models or Bernoulli distributions can be also considered.

Using the aforementioned prior and posterior, following close form solution for the KL divergence $D_{KL}$ (left term of the loss function) can be obtained:

$$D_{KL}(q_{\phi(Z|X)} \| p_\theta(z)) = -\frac{1}{2} \sum_{i=1}^{N} (1 + \log\sigma^2_{(z_i|x)} - \mu^2_{(z_i|x)} - \sigma^2_{(z_i|x)})$$

and following expression for the reconstruction loss $\mathbb{E}_{q\phi(Z|X)}$ (right term of the loss function):

$$\mathbb{E}_{q\phi(Z|X)}[\log p_\theta(x|z)] = -\frac{1}{L} \sum_{i=1}^{L} \left\| x - \mu_{x|z}(z_i) \right\|$$

Combining the reconstruction loss and the KL divergence results into a loss function that encourages a trade-off between expensiveness and conciseness, pushing the model toward perfectionist tendencies yet also learning a simple latent space representation based on the chosen prior:

$$\mathbb{L}(\theta, \phi; x) = -\frac{1}{L} \sum_{i=1}^{L} \left\| x - \mu_{x|z}(z_i) \right\| - \frac{1}{2} \sum_{i=1}^{N} (1 + \log\sigma^2_{z_i|x} - \mu^2_{z_i|x} - \sigma^2_{z_i|x})$$

$\mathbb{L}(\theta, \phi; x)$ is the combined loss function, i.e., the VAE Loss.

By defining the conjugate prior $p_\theta(z)$ as a multivariate Gaussian distribution $N \sim (0, I)$ and approximating the posterior $q_\phi(z|x)$ with multivariate Gaussian distribution $N \sim (\eta_{z|x}, \Sigma_{z|x})$, the VAE architecture is definable along with associated loss function.

During a training process of the variational autoencoder, data x (can be a temporal data stream or singular data) may be given as input to the encoder (any type of neural network). x is then transformed through a neural network into parameters $\eta_{z|x}, \Sigma_{z|x}$ that describe support distribution $q_\phi(z|x)$. Then latent value z|x is sampled from distribution $N \sim (\eta_{z|x}, \Sigma_{z|x})$ and transformed through the decoder (any type of neural network) network into a reconstruction x̂ of the input x. This reconstruction represents the mean value $\eta_{x|z}$ of the distribution (x|z).

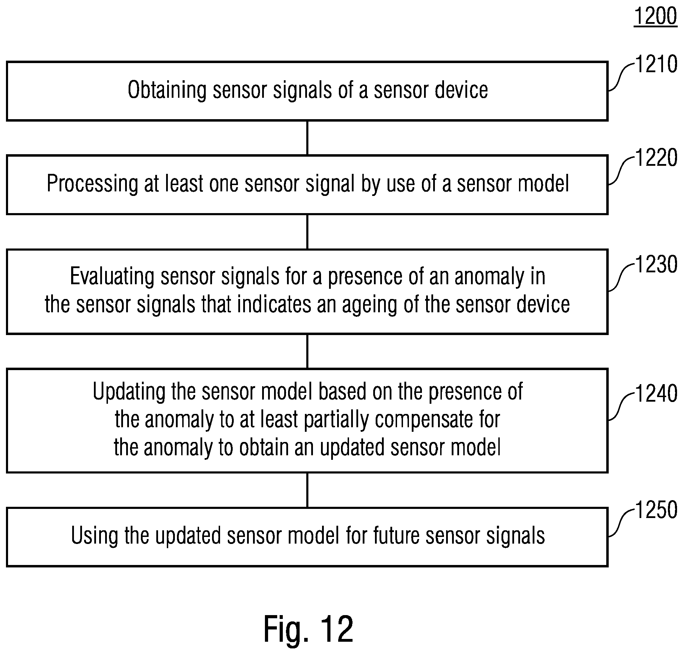

Fig. 12 shows a schematic flow chart of a method 1200 according to an embodiment. A step 1210 comprises obtaining sensor signals of a sensor device. A step 1220 comprises processing at least one sensor signal by use of a sensor model. A step 1240 comprises evaluating sensor signals for a presence of an anomaly in the sensor signals that indicates an ageing of the sensor device. A step 1240 comprises updating the sensor model based on the presence of the anomaly that is partially compensate for the anomaly to obtain an updated sensor model. A step 1250 comprises using the updated sensor model for future sensor signals.

According to a first aspect there is provided a calculation unit (10) for a sensor device (100), the calculation unit comprising:

an interface (14) configured for obtaining sensor signals (12) of the sensor device (100);

a processing processor (16) configured for processing at least one sensor signal (12) by use of a sensor model ($18_1$);

a model processor (24) configured for evaluating sensor signals (12) for a presence of an anomaly in the sensor signals (12) that indicates an ageing of the sensor device (100);

wherein the model processor (24) is configured for updating the sensor model ($18_1$) based on the presence of the anomaly to at least partially compensate for the anomaly to obtain an updated sensor model ($18_2$); and

wherein the processing processor (16) is configured for using the updated sensor model ($18_2$) for future sensor signals (12).

According to a second aspect referring to aspect 1, wherein the model processor (24) comprises an encoder (34), e.g., part of VAE, configured for encoding the sensor signals (12) to a latent space (32); wherein the model processor (24) is configured for determining a measure associated with a mismatch, e.g., distance, between the encoded sensor signals (12) on the one hand and a benchmark such as cluster centrals of the normal data on the other hand; wherein the model processor (24) is configured for determining the presence of the anomaly based on the measure being at least a predefined threshold.

According to a third aspect referring to aspect 2, the encoder (34) is configured for determining a first cluster central in the latent space (32) of a benchmark dataset e.g., a normal dataset and for determining a second cluster central in the latent space (32) of the sensor signals (12); wherein the encoder (34) is configured for determining the measure based on a relationship such as a ratio and/or a difference between the first cluster central and the second cluster central.

According to a fourth aspect referring to any of the previous aspects the model processor (24) comprises an encoder (34), e.g., part of VAE, configured for encoding the sensor signals (12) from a sensor signal space to a latent space (32); wherein the model processor (24) comprises a decoder (38) configured for decoding the encoded sensor signals to the sensor signal space to obtain restored sensor signals (12');
wherein the model processor (24) is configured for determining a measure associated with a mismatch between the sensor signals (12) and the restored sensor signals (12'); wherein the model processor (24) is configured for determining the presence of the anomaly based on the measure being at least a predefined threshold.

According to a fifth aspect referring to any of the previous aspects the model processor (24) comprises a neural network to provide at least an encoder (34) of a variational autoencoder structure or is adapted for a principal component analysis.

According to a sixth aspect referring to any of the previous aspects, for updating the sensor model ($18_1$), the calculation unit (10) is configured for obtaining reference sensor signals from a reference sensor device and to determine an updated ground of truth for the updated sensor model ($18_2$) from the reference sensor signals.

According to a seventh aspect referring to any of the previous aspects, for updating the sensor model ($18_1$), the model processor (24) is configured for performing a transfer learning (265) using the sensor model ($18_1$) and reference sensor signals from a reference sensor device to obtain the updated sensor model ($18_2$).

According to an eighth aspect referring to any of the previous aspects the calculation unit comprises an evaluation processor (28), e.g., using artificial intelligence, AI, configured for evaluating a certainty of the updated sensor model ($18_2$), e.g., comprising a comparison against a given requirements, e.g. a maximum allowed uncertainty for the expected accuracy. For example, if the threshold is exceeded a new update with new/more data may be performed.

According to a ninth aspect referring to any of the previous aspects, the model processor (24) is configured for determining the presence of the anomaly as a presence of a first anomaly and for evaluating the sensor signals (12) for a presence of a second anomaly that is related to a sensor drift; wherein the calculation unit is configured for recalibrating (260) the sensor device (100) using a baseline recalibration mechanism.

According to a tenth aspect referring to aspect 9, the model processor (24) is configured for performing a second evaluation of time domain features of the sensor signals (12) to determine the presence of the second anomaly; and for performing a first evaluation of frequency domain features of the sensor signals (12) for determining the presence of the first anomaly.

According to an eleventh aspect referring to aspect 10, wherein the model processor (24) is configured for associating the presence of the sensor drift with a presence of an anomaly in the time domain features and with an absence of an anomaly in the frequency domain features; and to associate the presence of sensor aging with the presence of an anomaly in the frequency domain features.

According to a twelfth aspect referring a sensor device (100) comprises:

a calculation unit (10) according to any one of the previous aspects; and

a sensor unit (20) for providing the sensor signals (12).

According to a thirteenth aspect referring to aspects 12, the sensor unit (20) comprises at least one of a gas sensor, a temperature sensor, a humidity sensor, an ultrasonic sensor and a pressure sensor.

According to a fourteenth aspect a method comprises:

obtaining (1210) sensor signals of a sensor device;

processing (1220) at least one sensor signal by use of a sensor model;

evaluating (1230) sensor signals for a presence of an anomaly in the sensor signals that indicates an ageing of the sensor device;

updating (1240) the sensor model based on the presence of the anomaly to at least partially compensate for the anomaly to obtain an updated sensor model; and

using (1250) the updated sensor model for future sensor signals.

According to a fifteenth aspect a computer readable digital storage medium is provided having stored thereon a computer program having a program code for performing, when running on a computer, a method according to aspect 14.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. A calculation unit (10) for a sensor device (100), the calculation unit comprising:

   an interface (14) configured for obtaining sensor signals (12) of the sensor device (100);
   a processing processor (16) configured for processing at least one sensor signal (12) by use of a sensor model $(18_1)$;
   a model processor (24) configured for evaluating sensor signals (12) for a presence of an anomaly in the sensor signals (12) that indicates an ageing of the sensor device (100);
   wherein the model processor (24) is configured for updating the sensor model $(18_1)$ based on the presence of the anomaly to at least partially compensate for the anomaly to obtain an updated sensor model $(18_2)$; and
   wherein the processing processor (16) is configured for using the updated sensor model $(18_2)$ for future sensor signals (12).

2. The calculation unit according to claim 1, wherein the model processor (24) comprises an encoder (34) configured for encoding the sensor signals (12) to a latent space (32); wherein the model processor (24) is configured for determining a measure associated with a mismatch between the encoded sensor signals (12) on the one hand and a benchmark on the other hand; wherein the model processor (24) is configured for determining the presence of the anomaly based on the measure being at least a predefined threshold.

3. The calculation unit of claim 2, wherein encoder (34) is configured for determining a first cluster central in the latent space (32) of a benchmark dataset and for determining a second cluster central in the latent space (32) of the sensor signals (12); wherein the encoder (34) is configured for determining the measure based on a relationship between the first cluster central and the second cluster central.

4. The calculation unit according to any one of previous claims, wherein the model processor (24) comprises an encoder (34) configured for encoding the sensor signals (12) from a sensor signal space to a latent space (32); wherein the model processor (24) comprises a decoder (38) configured for decoding the encoded sensor signals to the sensor signal space to obtain restored sensor signals (12');
   wherein the model processor (24) is configured for determining a measure associated with a mismatch between the sensor signals (12) and the restored sensor signals (12'); wherein the model processor (24) is configured for determining the presence of the anomaly based on the measure being at least a predefined threshold.

5. The calculation unit according to any one of previous claims, wherein the model processor (24) comprises a neural network to provide at least an encoder (34) of a variational autoencoder structure or is adapted for a principal component analysis.

6. The calculation unit according to any one of previous claims, wherein, for updating the sensor model $(18_1)$, the calculation unit (10) is configured for obtaining reference sensor signals from a reference sensor device and to determine an updated ground of truth for the updated sensor model $(18_2)$ from the reference sensor signals.

7. The calculation unit according to any one of previous claims, wherein, for updating the sensor model $(18_1)$, the model processor (24) is configured for performing a transfer learning (265) using the sensor model $(18_1)$ and reference sensor signals from a reference sensor device to obtain the updated sensor model $(18_2)$.

8. The calculation unit according to any one of previous claims, comprising an evaluation processor (28) configured for evaluating a certainty of the updated sensor model $(18_2)$.

9. The calculation unit according to any one of previous claims, wherein the model processor (24) is configured for determining the presence of the anomaly as a presence of a first anomaly and for evaluating the sensor signals (12) for a presence of a second anomaly that is related to a sensor drift; wherein the calculation unit is configured for recalibrating (260) the sensor device (100) using a baseline recalibration mechanism.

10. The calculation unit according to claim 9, wherein the model processor (24) is configured for performing a second evaluation of time domain features of the sensor signals (12) to determine the presence of the second anomaly; and for performing a first evaluation of frequency domain features of the sensor signals (12) for determining the presence of the first anomaly.

11. The calculation unit according to claim 10, wherein the model processor (24) is configured for associating the presence of the sensor drift with a presence of an anomaly in the time domain features and with an absence of an anomaly in the frequency domain features; and to associate the presence of sensor aging with the presence of an anomaly in the frequency domain features.

12. A sensor device (100) comprising:

> a calculation unit (10) according to any one of the previous claims; and
> a sensor unit (20) for providing the sensor signals (12).

13. The sensor device (100) according to claim 12, wherein the sensor unit (20) comprises at least one of a gas sensor, a temperature sensor, a humidity sensor, an ultrasonic sensor and a pressure sensor.

14. A method comprising:

> obtaining (1210) sensor signals of a sensor device;
> processing (1220) by a processing processor (16) at least one sensor signal by use of a sensor model evaluating (1230) sensor signals for a presence of an anomaly in the sensor signals that indicates an ageing of the sensor device;
> updating (1240) the sensor model based on the presence of the anomaly to at least partially compensate for the anomaly to obtain an updated sensor model; and
> using (1250) the updated sensor model for future sensor signals.

15. A computer readable digital storage medium having stored thereon a computer program having a program code for performing, when running on a computer, a method according to claim 14.

**Patentansprüche**

1. Eine Berechnungseinheit (10) für eine Sensorvorrichtung (100), wobei die Berechnungseinheit folgende Merkmale aufweist:

> eine Schnittstelle (14), die konfiguriert ist zum Erhalten von Sensorsignalen (12) der Sensorvorrichtung (100);
> einen Verarbeitungsprozessor (16), der konfiguriert ist zum Verarbeiten zumindest eines Sensorsignals (12) unter Verwendung eines Sensormodells ($18_1$);
> einen Modellprozessor (24), der konfiguriert ist zum Auswerten von Sensorsignalen (12) hinsichtlich eines Vorhandenseins einer Anomalie in den Sensorsignalen (12), die eine Alterung der Sensorvorrichtung (100) anzeigt;
> wobei der Modellprozessor (24) konfiguriert ist zum Aktualisieren des Sensormodells ($18_1$) auf der Basis des Vorhandenseins der Anomalie, um zumindest teilweise die Anomalie zu kompensieren, um ein aktualisiertes Sensormodell ($18_2$) zu erhalten; und
> wobei der Verarbeitungsprozessor (16) konfiguriert ist zum Verwenden des aktualisierten Sensormodells ($18_2$) für zukünftige Sensorsignale (12).

2. Die Berechnungseinheit gemäß Anspruch 1, wobei der Modellprozessor (24) einen Codierer (34) aufweist, der konfiguriert ist zum Codieren der Sensorsignale (12) in einen latenten Raum (32); wobei der Modellprozessor (24) konfiguriert ist zum Bestimmen eines Maßes, das einer Nichtübereinstimmung zwischen den codierten Sensorsignalen (12) einerseits und einem Benchmark andererseits zugeordnet ist; wobei der Modellprozessor (24) konfiguriert ist zum Bestimmen des Vorhandenseins der Anomalie auf der Basis, dass das Maß zumindest ein vordefinierter Schwellenwert ist.

3. Die Berechnungseinheit gemäß Anspruch 2, wobei der Codierer (34) konfiguriert ist zum Bestimmen eines ersten Clusters zentral in dem latenten Raum (32) eines Benchmark-Datensatzes und zum Bestimmen eines zweiten Clusters zentral in dem latenten Raum (32) der Sensorsignale (12); wobei der Codierer (34) konfiguriert ist zum Bestimmen des Maßes auf der Basis einer Beziehung zwischen dem ersten zentralen Cluster und dem zweiten zentralen Cluster.

4. Die Berechnungseinheit gemäß einem der vorhergehenden Ansprüche, wobei der Modellprozessor (24) einen Codierer (34) aufweist, der konfiguriert ist zum Codieren der Sensorsignale (12) von einem Sensorsignalraum in einen latenten Raum (32); wobei der Modellprozessor (24) einen Decodierer (38) aufweist, der konfiguriert ist zum Decodieren der codierten Sensorsignale in den Sensorsignalraum, um wiederhergestellte Sensorsignale (12') zu erhalten;

wobei der Modellprozessor (24) konfiguriert ist zum Bestimmen eines Maßes, das einer Nichtübereinstimmung zwischen den Sensorsignalen (12) und den wiederhergestellten Sensorsignalen (12') zugeordnet ist; wobei der Modellprozessor (24) konfiguriert ist zum Bestimmen des Vorhandenseins der Anomalie auf der Basis, dass das Maß zumindest ein vordefinierter Schwellenwert ist.

5. Die Berechnungseinheit gemäß einem der vorhergehenden Ansprüche, wobei der Modellprozessor (24) ein neuronales Netzwerk aufweist, um zumindest einen Codierer (34) einer Variational-Autoencoder-Struktur bereitzustellen, oder für eine Hauptkomponentenanalyse angepasst ist.

6. Die Berechnungseinheit gemäß einem der vorhergehenden Ansprüche, wobei zum Aktualisieren des Sensormodells $(18_1)$ die Berechnungseinheit (10) konfiguriert ist zum Erhalten von Referenzsensorsignalen von einer Referenzsensorvorrichtung und zum Bestimmen eines aktualisierten Wahrheitsgrundes für das aktualisierte Sensormodell $(18_2)$ aus den Referenzsensorsignalen.

7. Die Berechnungseinheit gemäß einem der vorhergehenden Ansprüche, wobei zum Aktualisieren des Sensormodells $(18_1)$ der Modellprozessor (24) konfiguriert ist zum Durchführen eines Transferlernens (265) unter Verwendung des Sensormodells $(18_1)$ und von Referenzsensorsignalen von einer Referenzsensorvorrichtung, um das aktualisierte Sensormodell $(18_2)$ zu erhalten.

8. Die Berechnungseinheit gemäß einem der vorhergehenden Ansprüche, die einen Auswertungsprozessor (28) aufweist, der konfiguriert ist zum Auswerten einer Sicherheit des aktualisierten Sensormodells $(18_2)$.

9. Die Berechnungseinheit gemäß einem der vorhergehenden Ansprüche, wobei der Modellprozessor (24) konfiguriert ist zum Bestimmen des Vorhandenseins der Anomalie als ein Vorhandensein einer ersten Anomalie und zum Auswerten der Sensorsignale (12) hinsichtlich eines Vorhandenseins einer zweiten Anomalie, die mit einer Sensordrift in Beziehung steht; wobei die Berechnungseinheit konfiguriert ist zum Rekalibrieren (260) der Sensorvorrichtung (100) unter Verwendung eines Basislinienrekalibrierungsmechanismus.

10. Die Berechnungseinheit gemäß Anspruch 9, wobei der Modellprozessor (24) konfiguriert ist zum Durchführen einer zweiten Auswertung von Zeitbereichsmerkmalen der Sensorsignale (12), um das Vorhandensein der zweiten Anomalie zu bestimmen; und zum Durchführen einer ersten Auswertung von Frequenzbereichsmerkmalen der Sensorsignale (12), um das Vorhandensein der ersten Anomalie zu bestimmen.

11. Die Berechnungseinheit gemäß Anspruch 10, wobei der Modellprozessor (24) konfiguriert ist zum Zuordnen des Vorhandenseins der Sensordrift zu einem Vorhandensein einer Anomalie in den Zeitbereichsmerkmalen und zu einem Fehlen einer Anomalie in den Frequenzbereichsmerkmalen; und zum Zuordnen des Vorhandenseins einer Sensoralterung zu dem Vorhandensein einer Anomalie in den Frequenzbereichsmerkmalen.

12. Eine Sensorvorrichtung (100), die folgende Merkmale aufweist:

eine Berechnungseinheit (10) gemäß einem der vorhergehenden Ansprüche; und
eine Sensoreinheit (20) zum Bereitstellen der Sensorsignale (12).

13. Die Sensorvorrichtung (100) gemäß Anspruch 12, wobei die Sensoreinheit (20) zumindest einen Gassensor, einen Temperatursensor, einen Feuchtigkeitssensor, einen Ultraschallsensor und einen Drucksensor aufweist.

14. Ein Verfahren, das folgende Schritte aufweist:

Erhalten (1210) von Sensorsignalen einer Sensorvorrichtung;

Verarbeiten (1220), durch einen Verarbeitungsprozessor (16), zumindest eines Sensorsignals unter Verwendung eines Sensormodells;

Auswerten (1230) von Sensorsignalen hinsichtlich eines Vorhandenseins einer Anomalie in den Sensorsignalen, die eine Alterung der Sensorvorrichtung anzeigt;

Aktualisieren (1240) des Sensormodells auf der Basis des Vorhandenseins der Anomalie, um zumindest teilweise die Anomalie zu kompensieren, um ein aktualisiertes Sensormodell zu erhalten; und

Verwenden (1250) des aktualisierten Sensormodells für zukünftige Sensorsignale.

15. Ein computerlesbares digitales Speichermedium, auf dem ein Computerprogramm gespeichert ist, das einen Programmcode zum Durchführen, wenn es auf einem Computer abläuft, eines Verfahrens gemäß Anspruch 14 aufweist.

## Revendications

1. Une unité (10) de calcul pour un dispositif (100) capteur, l'unité de calcul comprenant :

   une interface (14) configurée pour obtenir des signaux (12) de capteurs du dispositif (100) capteur ;
   un processeur (16) de traitement configuré pour traiter au moins un signal (12) de capteur en utilisant un modèle $(18_1)$ de capteur ;
   un processeur (24) de modèle configuré pour évaluer des signaux (12) de capteur en ce qui concerne la présence d'une anomalie dans les signaux (12) de capteur, qui indique un vieillissement du dispositif (100) de capteur ;
   dans laquelle le processeur (24) de modèle est configuré pour mettre à jour le modèle $(18_1)$ de capteur pour compenser au moins en partie l'anomalie afin d'obtenir un modèle $(18_2)$ de capteur mis à jour ; et
   dans laquelle le processeur (16) de traitement est configuré pour utiliser le modèle $(18_2)$ de capteur mis à jour pour des signaux (12) de capteur à venir.

2. L'unité de calcul suivant la revendication 1, dans laquelle le processeur (24) de modèle comprend un codeur (34) configuré pour coder les signaux (12) de capteur à un espace (32) latent ; dans laquelle le processeur (24) de modèle est configuré pour déterminer une mesure associée à une discordance entre les signaux (12) de capteur codés d'une part et une référence d'autre part ; dans laquelle le processeur (24) de modèle est configuré pour déterminer la présence de l'anomalie sur la base que la mesure est au moins un seuil défini à l'avance.

3. L'unité de calcul suivant la revendication 2, dans laquelle le codeur (34) est configuré pour déterminer un premier partitionnement central dans l'espace (32) latent d'un ensemble de données de référence et pour déterminer un deuxième partitionnement central dans l'espace (32) latent des signaux (12) de capteur ; dans laquelle le codeur (34) est configuré pour déterminer la mesure sur la base d'une relation entre le premier partitionnement central et le deuxième partitionnement central.

4. L'unité de calcul suivant l'une quelconque des revendications précédentes, dans laquelle le processeur (24) de modèle comprend un codeur (34) configuré pour coder les signaux (12) de capteur d'un espace de signal de capteur à un espace (32) latent ; dans laquelle le processeur (24) de modèle comprend un décodeur (38) configuré pour décoder les signaux de capteur codés à l'espace de signal de capteur afin d'obtenir des signaux (12') de capteur restaurés ;
   dans laquelle le processeur (24) de modèle est configuré pour déterminer une mesure associée à une discordance entre les signaux (12) de capteur et les signaux (12') de capteur restaurés ; dans laquelle le processeur (24) de modèle est configuré pour déterminer la présence de l'anomalie, sur la base que la mesure est au moins un seuil défini à l'avance.

5. L'unité de calcul suivant l'une quelconque des revendications précédentes, dans laquelle le processeur (24) de modèle comprend un réseau neuronal pour donner au moins un codeur (34) d'une structure d'autocodeur variationnel ou est conçu pour une analyse de composant principal.

6. L'unité de calcul suivant l'une quelconque des revendications précédentes, dans laquelle, pour la mise à jour du modèle $(18_1)$ de capteur, l'unité (10) de calcul est configurée pour obtenir des signaux de capteur de référence d'un dispositif capteur de référence et pour déterminer une base de vérité mise à jour pour le modèle $(18_2)$ de capteur mis à jour à partir des signaux de capteur de référence.

7. L'unité de calcul suivant l'une quelconque des revendications précédentes, dans laquelle, pour la mise à jour du modèle ($18_1$) de capteur, le processeur (24) de modèle est configuré pour effectuer un apprentissage (265) de transfert en utilisant le modèle ($18_1$) de capteur et les signaux de capteur de référence d'un dispositif capteur de référence afin d'obtenir le modèle ($18_2$) de capteur mis à jour.

8. L'unité de calcul suivant l'une quelconque des revendications précédentes, comprenant un processeur (28) d'évaluation configuré pour évaluer la certitude du modèle ($18_2$) de capteur mis à jour.

9. L'unité de calcul suivant l'une quelconque des revendications précédentes, dans laquelle le processeur (24) de modèle est configuré pour déterminer la présence de l'anomalie comme une présence d'une première anomalie et pour évaluer les signaux (12) de capteur en ce qui concerne la présence d'une deuxième anomalie, qui est en relation avec une dérive du capteur ; dans laquelle l'unité de calcul est configurée pour réétalonner (260) le dispositif (100) capteur en utilisant un mécanisme de réétalonnage à ligne de base.

10. L'unité de calcul suivant la revendication 9, dans laquelle le processeur (24) de modèle est configurée pour effectuer une seconde évaluation de caractéristiques dans le domaine temporel des signaux (12) de capteur afin de déterminer la présence de la deuxième anomalie ; et pour effectuer une première évaluation de caractéristiques dans le domaine fréquentiel des signaux (12) de capteur pour déterminer la présence de la première anomalie.

11. L'unité de calcul suivant la revendication 10, dans laquelle le processeur (24) de modèle est configuré pour associer la présence de la dérive du capteur à la présence d'une anomalie dans les caractéristiques du domaine temporel et à une absence d'une anomalie dans les caractéristiques du domaine fréquentiel ; et pour associer la présence d'un vieillissement du capteur à la présence d'une anomalie dans les caractéristiques du domaine fréquentiel.

12. Un dispositif (100) capteur comprenant :

   une unité (10) de capteur suivant l'une quelconque des revendications précédentes ; et
   une unité (20) de capteur pour donner les signaux (12) de capteur.

13. Le dispositif (100) capteur suivant la revendication 12, dans laquelle l'unité (20) de capteur comprend au moins un capteur de gaz, un capteur de température, un capteur d'humidité, un capteur d'ultrasons et un capteur de pression.

14. Un procédé comprenant :

   obtenir (1210) des signaux de capteur d'un dispositif capteur ;
   traiter (1220) par un processeur (16) de traitement au moins un signal de capteur en utilisant un modèle de capteur évaluant (1230) des signaux de capteur en ce qui concerne la présence d'une anomalie dans les signaux de capteur, qui indique un vieillissement d'un dispositif capteur ;
   mettre à jour (1240) le modèle de capteur sur la base de la présence d'une anomalie pour compenser au moins en partie l'anomalie afin d'obtenir un modèle de capteur mis à jour ; et
   utiliser (1250) le modèle de capteur mis à jour pour des signaux de capteur à venir.

15. Un support de mémoire numérique pouvant être déchiffré par ordinateur sur lequel est mis en mémoire un code de programme pour effectuer, lorsqu'il est exécuté sur un ordinateur, un procédé suivant la revendication 14.

Fig. 1

Fig. 2

$$\text{loss} = (x - \hat{x})^2$$

32

36 — 12 ⟋ X

encoder

34

z

latent feature
(lower dimension)

decoder

38

36 — 12' ⟋ X̂

sensor
signal

reconstructed
sensor signal

300

20

EP 4 467 929 B1

Fig. 3

Fig. 4

400

reconstructed sensor signal

$\hat{X} = X|Z$

$\mu_{x|z}$

$\sigma_{x|z}$

$\varepsilon$

$\varepsilon \sim N(0,1)$

decoder $p_\theta(x|z)$  38

$z|x$

encoder $q_\phi(z|x)$  34

$\mu_{z|x}$  42

$\sigma_{z|x}$  44

$\varepsilon$

$\varepsilon \sim N(0,1)$

sensor signal

$X$  12

36

Fig. 5a

Input: Normal dataset $S = \{s_1, ..., s_N\}$, anomalous and normal dataset $X = \{x_1, ..., x_M\}$, VAE with encoder $q_\phi(.)$, and decoder $p_\theta(.)$, threshold error $e_{th}$, sample value L

Output: Reconstruction Error $\|x - \hat{x}\|$

$\phi, \theta \leftarrow$ train variational autoencoder using normal dataset S

for i = 1 to M do

$$\hat{x}_i = \frac{1}{L}\sum_{i-1}^{L} p_\theta(q_\phi(x_i))$$

reconstruction error(i) = $\|x_i - \hat{x}_i\|$

if reconstruction error(i) > $e_{th}$ then

$x_i$ is an anomaly

else

$x_i$ is not an anomaly

end if

end for

# Fig. 5b

Fig. 6a

Input: Normal dataset S = {$s_1$, ..., $s_N$}, anomalous and normal dataset X = {$x_1$, ..., $x_M$}, VAE with encoder $q_\phi(.)$, and decoder $p_\theta(.)$, threshold error mean $e_{th,mean}$ threshold error variance $e_{th,var}$

Output: Conditional mean and variance latent space to the data $\mu_{z|x}$, $\Sigma_{z|x}$

$\phi,\theta \leftarrow$ train variational autoencoder using normal dataset S

$$\mu_{mean}, \mu_{var} = \frac{1}{N} \sum_{i=1}^{N} q_\phi(s_i)$$

for i = 1 to M do

    $\mu_{z|x_i}$, $\Sigma_{z|x_i} = q_\phi(x_i)$

    reconstruction error mean(i) = $\|\mu_{z|x_i} - \mu_{mean}\|$

    reconstruction error var(i) = $\|\Sigma_{z|x} - \mu_{var}\|$

    if reconstruction error mean(i) > $e_{th,mean}$ or reconstruction error var(i) > $e_{th,var}$ then

        $x_i$ is an anomaly

    else

        $x_i$ is not an anomaly

    end if

end for

Fig. 6b

Fig. 7a

Fig. 7b

722 — reference device

720 — collect data

722 — reference device

265 — transfer learning

730 — updated model

740 — quantity prediction uncertainty

750 — decrease in uncetainty?

715 — yes

710 — reference device available?

724 — sensor device

755 — no

760 — model update successful

700

EP 4 467 929 B1

2 component PCA for unaged data and aged data

Fig. 8a

2 component PCA for undrifted data and drifted data

Fig. 8b

latent space for unaged data and aged data

Fig. 9a

| | Accuracy | Sensitivity | Specificity | Precision | FPR | FNR | F1 |
|---|---|---|---|---|---|---|---|
| VAE-Loss | 0.9458 | 0.9475 | 0.9449 | 0.9010 | 0.0551 | 0.0525 | 0.9236 |
| VAE-Latent | 0.8891 | 0.9296 | 0.8677 | 0.7881 | 0.1323 | 0.0704 | 0.8530 |

Fig. 9b

EP 4 467 929 B1

latent space for undrifted data and drifted data

Fig. 10a

| | Accuracy | Sensitivity | Specificity | Precision | FPR | FNR | F1 |
|---|---|---|---|---|---|---|---|
| VAE-Loss | 0.9317 | 0.8617 | 0.9662 | 0.9262 | 0.0338 | 0.1383 | 0.8928 |
| VAE-Latent | 0.9452 | 0.8984 | 0.9683 | 0.9331 | 0.0317 | 0.1016 | 0.9155 |

Fig. 10b

EP 4 467 929 B1

latent space for undrifted data and drifted data

Fig. 11a

| | Accuracy | Sensitivity | Specificity | Precision | FPR | FNR | F1 |
|---|---|---|---|---|---|---|---|
| VAE-Loss | 0.9588 | 0.9261 | 0.9749 | 0.9478 | 0.0251 | 0.0739 | 0.9368 |
| VAE-Latent | 0.9355 | 0.8817 | 0.9621 | 0.9201 | 0.0379 | 0.1183 | 0.9005 |

Fig. 11b

EP 4 467 929 B1

<u>1200</u>

```
┌─────────────────────────────────────────────────────────┐ ⌐1210
│         Obtaining sensor signals of a sensor device       │
└─────────────────────────────────────────────────────────┘

┌─────────────────────────────────────────────────────────┐ ⌐1220
│    Processing at least one sensor signal by use of a sensor model │
└─────────────────────────────────────────────────────────┘

┌─────────────────────────────────────────────────────────┐ ⌐1230
│     Evaluating sensor signals for a presence of an anomaly in     │
│   the sensor signals that indicates an ageing of the sensor device │
└─────────────────────────────────────────────────────────┘

┌─────────────────────────────────────────────────────────┐ ⌐1240
│        Updating the sensor model based on the presence of         │
│           the anomaly to at least partially compensate for        │
│          the anomaly to obtain an updated sensor model            │
└─────────────────────────────────────────────────────────┘

┌─────────────────────────────────────────────────────────┐ ⌐1250
│       Using the updated sensor model for future sensor signals    │
└─────────────────────────────────────────────────────────┘
```

## Fig. 12